# EUROPEAN PATENT APPLICATION

(11) **EP 2 028 494 A2**
(43) Date of publication of application: **25.02.2009**
(21) Application number: 08010599.2
(22) Date of filing: 11.06.2008
(51) Int. Cl.: G01N 35/00, G01N 35/10

(54) **Sample analyzer and sample analyzing method**

(30) Priority: 15.06.2007 JP 2007158577
(71) Applicant: SYSMEX CORPORATION, Kobe-shi, Hyogo 651-0073 (JP)
(72) Inventor: Ootani, Toshihiro, Kobe-shi Hyogo 651-0073 (JP); Mototsu, Kazunori, Kobe-shi Hyogo 651-0073 (JP); Matsue, Miyuki, Kobe-shi Hyogo 651-0073 (JP); Matsui, Jun, Kobe-shi Hyogo 651-0073 (JP); Katsumi, Hironori, Kobe-shi Hyogo 651-0073 (JP)
(74) Representative: HOFFMANN EITLE

(57) **Abstract**

The present invention is to present a sample analyzer which is capable of separate and dispose of the reaction container and the reaction liquid respectively even when magnetic particles are included in a reagent. The sample analyzer 1 comprises: a detector 16 for detecting the target substance by using a cuvette 300 which contains the target substance captured by the magnetic particle; an adsorption section 183 for magnetically adsorbing the magnetic particle in the cuvette 300; a liquid aspiration section 18 for aspirating a liquid in the cuvette 300 in a state in which the magnetic particle in the cuvette 300 is magnetically adsorbed by the adsorption section 183; and a disposal section 19 for accommodating the cuvette 300.

## Description

### FIELD OF THE INVENTION

The present invention relates to a sample analyzer and sample analyzing method, and particularly relates to a sample analyzer and sample analyzing method which aspirate a liquid in a container after analyzing a target substance.

### BACKGROUND

In sample analyzers which analyze target substances contained in a sample, such as blood or the like, using reagents, the analyzer becomes contaminated by reaction solution when the reaction container which is holding the reaction solution is discarded, and the reaction solution stored in the disposal unit may adhere to the user who touches the disposal unit.

Japanese Examined Utility Model Publication No. H1-25321 discloses a separator-disposal apparatus which aspirates a liquid within a container after a target substance has been analyzed. The separator-disposal apparatus disclosed in Japanese Examined Utility Model Publication No. H1-25321 is configured to aspirate a reaction liquid accommodated in a reaction container after use in a sample analyzer or the like by an aspiration-drainage means, and separate and dispose of the reaction container and the reaction liquid respectively.

In some cases, a sample analyzer may use a reagent which contains magnetic particles in an analysis of a target substance.

However, when the separator-disposal apparatus of Japanese Examined Utility Model Publication No. H1-25321 is applied to the sample analyzer which performs analysis using the reagent that includes magnetic particles, the magnetic particles disadvantageously jammed the aspiration-drainage means because the aspiration-drainage means aspirates the magnetic particles together with the reaction liquid. When magnetic particles are included in a reagent, therefore, this separator-disposal apparatus cannot reliably aspirate the reaction liquid, and as a result a problem arises inasmuch as the reaction container and the reaction liquid cannot be separated and discarded.

### SUMMARY

A first aspect of the present invention is a sample analyzer for analyzing a target substance contained in a sample by using a reagent containing a magnetic particle, comprising: a detector for detecting the target substance by using a container which contains the target substance captured by the magnetic particle; an adsorption section for magnetically adsorbing the magnetic particle in the container, the target substance in the container having been detected by the detector; a liquid aspiration section for aspirating a liquid in the container in a state in which the magnetic particle in the container is magnetically adsorbed by the adsorption section, the target substance in the container having been detected by the detector; and a disposal section for accommodating the container, the liquid in the container having been aspirated by the liquid aspiration section.

A second aspect of the present invention is a sample analyzing method for analyzing a target substance contained in a sample by using a reagent containing a magnetic particle, comprising steps of: (a) detecting the target substance by using a container which contains the target substance captured by the magnetic particle; (b) magnetically adsorbing the magnetic particle in the container after performing the step (a); (c) aspirating a liquid in the container while magnetically adsorbing the magnetic particle in the container; (d) disposing of the container after performing the step (c).

### BRIEF DESCRIPTION OF THE DRAWINGS

FIG. 1 is a perspective view showing the overall structure of an immunoanalyzer of an embodiment of the present invention;
FIG. 2 is a block diagram that includes the control section of the measuring device of the immunoanalyzer of the embodiment of the present invention;
FIG. 3 is a block diagram showing the structure of the control section of the measuring device of FIG. 2;
FIG. 4 is a block diagram showing the control device of the immunoanalyzer of the embodiment of the present invention;
FIG. 5 is a side view of a pipette tip of the immunoanalyzer of the embodiment of the present invention;
FIG. 6 is a side view of a cuvette of the immunoanalyzer of the embodiment of the present invention;
FIGS. 7 through 11 are perspective views illustrating details of the immunoanalyzer of the embodiment of the present invention;
FIGS. 12 and 13 are perspective views illustrating details of the gripper of the immunoanalyzer of the embodiment of the present invention;
FIG. 14 illustrates details of the liquid aspirating unit of the immunoanalyzer of the embodiment of the present invention;
FIG. 15 is a cross section view along the 100-100 line of FIG. 14;
FIG. 16 illustrates details of the liquid aspirating unit of the immunoanalyzer of the embodiment of the present invention;
FIG. 17 is a cross section view along the 200-200 line of FIG. 16;
FIG. 18 illustrates details of the adsorption unit of the immunoanalyzer of the embodiment of the present invention;
FIGS. 19, 21 and 22 illustrates details of the nozzle of the immunoanalyzer of the embodiment of the present invention;
FIG. 20 is a cross section view along the 300-300 line of FIG. 19;
FIGS. 23 through 25 illustrate details of the liquid aspirating unit and the adsorption unit of the immunoanalyzer of the embodiment of the present invention; and
FIG. 26 is a flow chart illustrating the series of operations from the beginning of the startup to the end of the startup of the immunoanalyzer of the embodiment of the present invention.

### DETAILED DESCRIPTION OF THE EMBODIMENT

An embodiment of the present invention is described hereinafter based on the drawings.

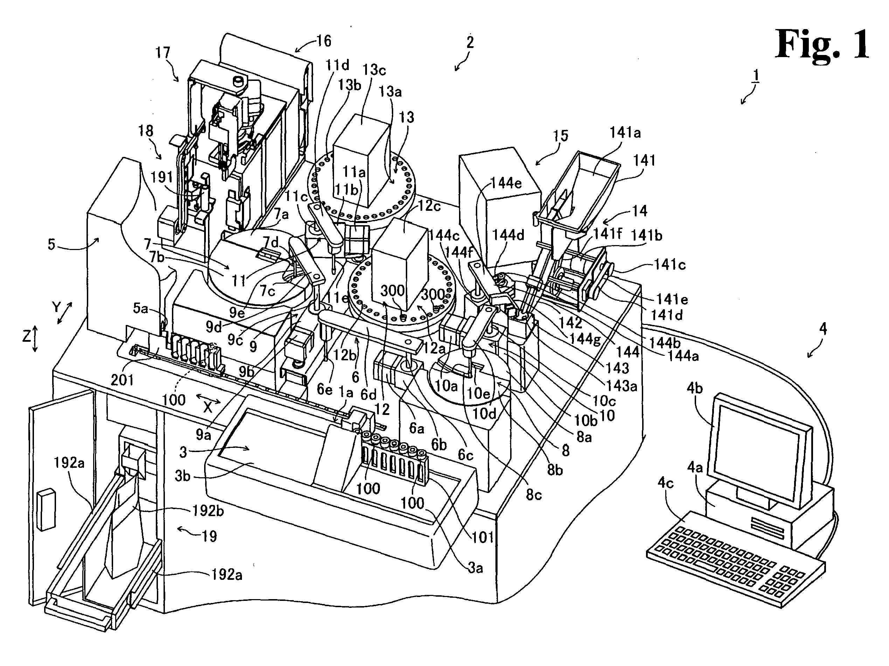

The overall structure of an immunoanalyzer of an embodiment of the present invention is described below with reference to FIGS. 1 through 6. In the present embodiment is described in terms of the present invention applied to an immunoanalyzer as an example of a sample analyzer.

An immunoanalyzer 1 of an embodiment of the present invention is an apparatus which performs examinations for various items such as hepatitis B, hepatitis C, tumor markers, thyroid hormone and the like using samples such as blood. In the immunoanalyzer 1, magnetic particles (R2 reagent) are bound to a capture antibody (R1 reagent) which is already bound to an antigen object of measurement contained in a sample such as blood or the like, and thereafter the R1 reagent, which includes any unreacted (free) capture antibody, is eliminated by attracting the bound antigen, the capture antibody, and the magnetic particles to a magnet (not shown in the drawing) disposed in a BF (bound free) separation section 15 (refer to FIG. 1). After a labeling antibody (R3 reagent) has been bound to the antibody to which the magnetic particles previously bonded, the R3 reagent, which includes unreacted (free) labeling antibody, is eliminated by attracting the bound magnetic particles, the antigen, and the labeling antibody to the magnet of the BF separation section 15. Finally, after a buffer solution (R4 reagent) and a luminous substrate (R5 reagent), which emits light in a reaction process with the labeling antibody, have been added, the amount of light generated by the reaction of the luminous substrate and the labeling antibody is measured. The antigen bound to the labeling antibody is quantitatively measured during the course of this process.

As shown in FIG. 1, the immunoanalyzer 1 is provided with a measuring device 2, a sample transporting unit (sampler) 3 which is disposed on the front side of the measuring device 2, and a control device 4 which is configured by a PC (personal computer) that is electrically connected to the measuring device 2. The measuring device 2 is configured by a pipette supplying device 5, a sample dispensing arm 6, reagent accommodating sections 7 and 8, reagent dispensing arms 9, 10, and 11, a primary reaction section 12 and a secondary reaction section 13, a cuvette supplying section 14, the BF separation section 15, a detector 16, a cuvette transporting unit 17 which is disposed on the front side of the detector 16, a liquid aspiration section 18, and a cuvette disposal section 19.

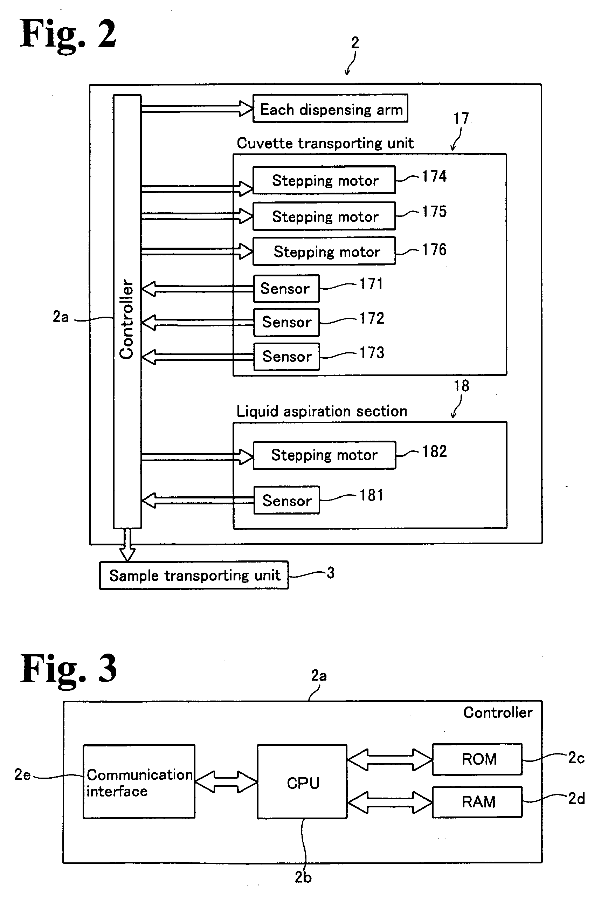

As shown in FIG. 2, each device (each dispensing arm, the cuvette transporting unit 17, and the liquid aspiration section 18 and the like) in the measuring device 2 is controlled by a controller 2a which is provided in the measuring device 2. Specifically, the controller 2a receives signals from the various sensors (sensors 171 through 173) which are provided in the cuvette transporting unit 17, and controls the actuation of the various drive sources (stepping motors 174 through 176 and the like) which are provided in the cuvette transporting unit 17. The controller 2a also receives signals from a sensor 181 which is provided in the liquid aspiration section 18, and controls the actuation of a drive source (stepping motor 182) which is provided in the liquid aspiration section 18. The sampler 3 is also controlled by the controller 2a. The various dispensing arms, sensors, and drive sources will be described in detail later.

The controller 2a is mainly configured by a CPU 2b, ROM 2c, RAM 2d, and a communication interface 2e, as shown in FIG. 3.

The CPU 2b is capable of executing computer programs which are stored in the ROM 2c, and computer programs which are read from the RAM 2d. The ROM 2cstores the computer programs which are to be executed by the CPU 2b, as well as the data used in the execution of the computer programs. The RAM 2d is used when reading the computer programs that are stored in the ROM 2c. The RAM 2d is also used as a work area of the CPU 2b when the computer programs are executed.

The communication interface 2e is connected to the control device 4, and has the functions of sending the sample optical information (data of the amount of light emitted by the reaction of the labeling antibody and the luminous substrate) to the control device 4, and receiving signals from a controller 4a of the control device 4. The communication interface 2e also has the function of sending commands from the CPU 2 in order to drive the various parts of the measuring device 2 and the sample transporting unit 3.

As shown in FIG. 1, the sample transporting unit 3 is configured to transport a rack 101, on which a plurality of sample-filled test tubes 100 are loaded, to a position corresponding to an aspiration position 1a at which the sample dispensing arm 6 aspirates the samples. The sample transporting unit 3 has a rack placement area 3a for placing the racks 101 which accommodate the test tubes 100 that contain unprocessed samples, and a rack storing area 3b for storing the racks 101 which accommodate the test tubes 100 that contain dispensed and processed samples. The unprocessed sample-filled test tube 100 is transported to a position corresponding to the aspiration position 1a of the sample dispensing arm 6, and the sample dispensing arm 6 aspirates the sample within the test tube 100. The rack 101, which accommodates the sample test tube 100, is thereafter stored at the rack storing area 3b.

The control device 4 (refer to FIG. 1) is configured by a personal computer (PC) which includes a controller 4a configured by a CPU, ROM, RAM and the like, and further includes a display unit 4b, and a keyboard 4c. The display unit 4b is provided to display analysis results and the like obtained by analyzing the digital signal data transmitted from the detector 16.

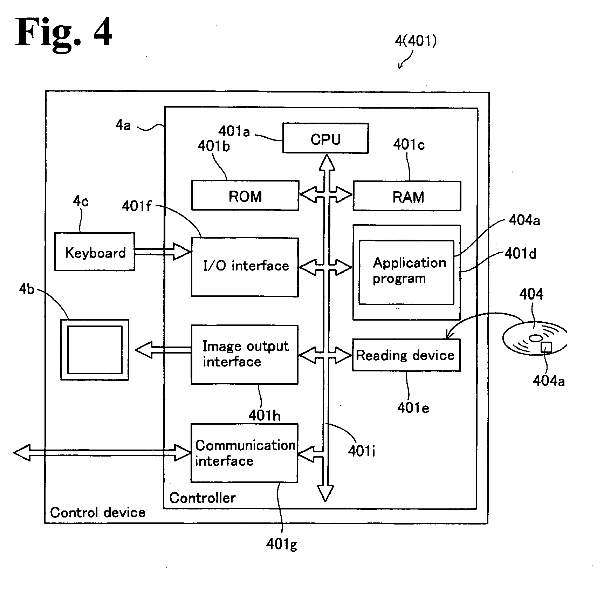

The structure of the control device 4 is described below. The control device 4 is a computer 401 mainly configured by a controller 4a, a display unit 4b, and a keyboard 4c, as shown in FIG. 4. The controller 4a is mainly configured by a CPU 401a, a ROM 401b, a RAM 401c, a hard disk 401d, a reading device 401e, an input/output (I/O) device 401f, a communication interface 401g, and an image output interface 401h. The CPU 401a, ROM 401b, RAM 401c, hard disk 401d, reading device 401e, I/O interface 401f, communication interface 401g, and image output interface 401h are connected by a bus 401i.

The CPU 401a is capable of executing the computer programs stored in the ROM 401b, and the computer programs loaded in the RAM 401c.The computer 401 functions as the control device 4 when the CPU 401a executes an application program 404a which is described later.

The ROM 401b is configured by a mask ROM, PROM, EPROM, EEPROM or the like, and stores the computer programs executed by the CPU 401a and data and the like used in conjunction therewith.

The RAM 401c is configured by an SRAM, DRAM or the like. The RAM 401c is used when reading the computer program recorded in the ROM 401b and stored on the hard drive 401d. The RAM 401c is also used as a work area of the CPU 401a when the computer programs are being executed.

The hard drive 401d contains various installed computer programs to be executed by the CPU 401a such as an operating system and application program and the like, as well as data used in the execution of these computer programs. The application program 404a used for immunoanalysis in the present embodiment is also installed on the hard disk 401d.

The reading device 401e is configured by a floppy disk drive, CD-ROM drive, DVD-ROM drive or the like, and is capable of reading the computer programs and data stored on a portable recording medium 404.The portable recording medium 404 stores the immunoanalysis application program 404a, and the application 404a is read from the portable recording medium 404 by the computer 401, which installs the application program 404a on the hard disk 401d.

The application program 404a is not only provided through the portable recording medium 404 inasmuch as the application program 404a may also be provided from an external device which is connected to the computer 401 over an electric communication line so as to be capable of communication by this electric communication line (whether wire line or wireless). For example, when the application program 404a is stored on the hard disk of a server computer on the Internet, the computer 401 may access the server computer and download the application program 404a, which is then installed on the hard disk 401d.

An operating system which provides a graphical user interface, such as Windows (registered trademark) or the like, a product of Microsoft Corporation, USA, is installed on the hard disk 401d.In the following description, the application program 404a operates on this operating system.

The I/O interface 401f is configured by a serial interface such as a USB, IEEE1394, RS232C or the like, a parallel interface such as SCSI, IDE, IEEE1284 or the like, or an analog interface such as a D/A converter, A/D converter or the like. The keyboard 4c is connected to the I/O interface 401f, so that a user can input data in the computer 401 using the keyboard 4c.

The communication interface 401g is, for example, an Ethernet (registered trademark) interface. The computer 401 can send and receive data to and from the measuring device 2 via the communication interface 401g using a predetermined communication protocol.

The image output interface 401h is connected to the display unit 4b which is configured by an LCD, CRT or the like, so that image signals corresponding to the image data received from the CPU 401a can be output to the display unit 4b.The display unit 4b displays images (screens) in accordance with the input image signals.

The immunoanalysis application program 404a, which is installed on the hard disk 401d of the controller 4a, is used to measure the amount of antigen in the measurement sample using the amount of light emitted by the measurement sample (digital signal data) received from the detector 16 of the measurement device 2.

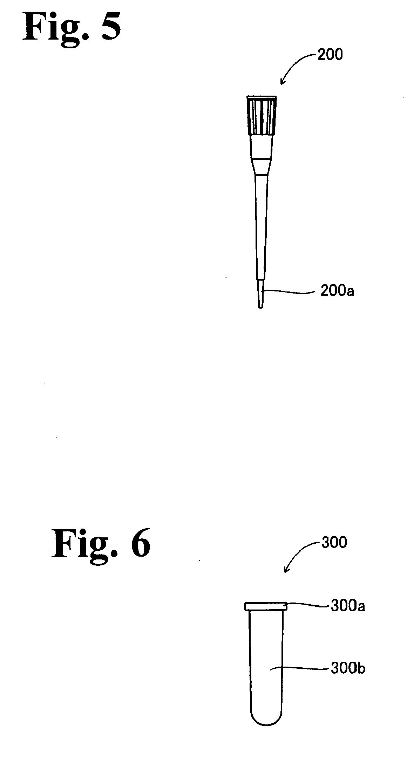

The pipette supplying device 5 (refer to FIG. 1) has the function of loading, one by one, an input pipette tip 200 (refer to FIG. 5) on an urgent sample tip rack 201 through a chute 5a. The pipette tip supplying device 5 has the function of supplying a pipette tip 200 through the chute 5a to the urgent sample tip rack 201 with a tip part 200a (refer to FIG. 5) facing downward.

The sample dispensing arm 6 (refer to FIG. 1) has the function of dispensing a sample within a test tube 100, which has been conveyed to the aspiration position 1a by the sample transporting unit 3, into a cuvette 300 (refer to FIG. 6), which is held by the holder 12b of a rotating table 12a of the primary reaction section 12 to be described later. As shown in FIG. 1, the sample dispensing arm 6 includes a motor 6a, a drive transmission 6b which is connected to the motor 6a, and an arm 6d which is mounted on the drive transmission 6b through a shaft 6c. The drive transmission 6b is configured so as to be capable of centrally rotating the shaft 6c so as to move the arm 6d in vertical directions (Z direction) by the drive force from the motor 6a. A pipette 6e, which aspirates and discharges the sample, is mounted on the leading end of the arm 6d. Furthermore, a pipette tip 200 (refer to FIG. 5), which is transported by the urgent sample tip rack 201, is installed on the leading end of the pipette 6e.

As shown in FIG. 1, the reagent accommodating section 7 is provided to accommodate reagent containers which hold R1 reagent that includes a capture antibody, and to hold reagent containers which hold R3 reagent that includes a labeling antibody. The reagent accommodating section 7 includes a top surface 7a which is mounted above the reagent containers so that foreign matter such as dust will not invade the reagent containers, and a lid 7b which is mounted on the top surface 7a so as to be openable. Formed on the top surface 7a are a channel 7c, into which a pipette 9e of a reagent dispensing arm 9 (to be described later) is inserted, and a channel 7d, into which a pipette 11e of a reagent dispensing arm 11 is inserted.

The reagent accommodating section 8 is provided to accommodate reagent containers which contain R2 reagent that includes magnetic particles. The reagent accommodating section 8 includes a top surface 8a which is mounted above the reagent containers so that foreign matter such as dust will not invade the reagent containers, and a lid 8b which is mounted on the top surface 8a so as to be openable. Formed on the top surface 8a is a channel 8c, into which a pipette 10e of a reagent dispensing arm 10 (to be described later) is inserted.

The reagent dispensing arm 9 has the function of aspirating the R1 reagent which is disposed in the reagent accommodating section 7, and dispensing the aspirated R1 reagent into a cuvette 300 which holds a dispensed sample in the primary reaction section 12. The reagent dispensing arm 9 includes a motor 9a, a drive transmission 9b which is connected to the motor 9a, and an arm 9d which is mounted on the drive transmission 9b through a shaft 9c. The drive transmission 9b is configured so as to be capable of centrally rotating the shaft 6c so as to move the arm 6d in vertical directions (Z direction) by the drive force from the motor 9a. A pipette 9e, which aspirates and discharges the R1 reagent, is mounted on the leading end of the arm 9d. That is, the pipette 9e aspirates the R1 reagent which is disposed in the reagent accommodating section 7, and thereafter dispenses the aspirated R1 reagent into a cuvette 300 which has previously received a dispensed sample in the primary reaction section 12.

The reagent dispensing arm 10 has the function of dispensing the R2 reagent, which is disposed in the reagent accommodating section 8, into the cuvette 300 which has already received the dispensed sample and R1 reagent in the primary reaction section 12. The reagent dispensing arm 10 includes a motor 10a, a drive transmission 10b which is connected to the motor 10a, and an arm 10d which is mounted on the drive transmission 10b through a shaft 10c. The drive transmission 10b is configured so as to be capable of centrally rotating the shaft 10c so as to move the arm 10d in vertical directions by the drive force from the motor 10a. A pipette 10e, which aspirates and discharges the R2 reagent, is mounted on the leading end of the arm 10d. The pipette 10e is thus configured to aspirate the R2 reagent of the reagent accommodating section 8, and thereafter dispense the aspirated R2 reagent into the cuvette 300 which has previously received the dispensed sample and the R1 reagent in the primary reaction section 12.

A reagent dispensing arm 11 has the function of aspirating R3 reagent which is disposed in the reagent accommodating section 7, and dispensing the aspirated R3 reagent into the cuvette 300 which has previously received the dispensed sample, the R1 reagent, and the R2 reagent in the primary reaction section 12. The reagent dispensing arm 11 includes a motor 11a, a drive transmission 11b which is connected to the motor 11a, and an arm 11d which is mounted on the drive transmission 11b through a shaft 11c. The drive transmission 11b is configured so as to be capable of centrally rotating the shaft 11c so as to move the arm 11d in vertical directions (Z direction) by the drive force from the motor 11a. A pipette 11e, which aspirates and discharges the R3 reagent, is mounted on the leading end of the arm 11d. The pipette 11e is thus configured to aspirate the R3 reagent of the reagent accommodating section 7, and thereafter dispense the aspirated R3 reagent into the cuvette 300 which has previously received the dispensed sample, the R1 reagent, and the R2 reagent in the secondary reaction section 13.

The primary reaction section 12 is provided to rotate the cuvette 300, which is held by the holder 12b of the rotating table 12a, through a predetermined angle at predetermined intervals (every 18 seconds in the present embodiment) so as to mix the sample, the R1 reagent, and the R2 reagent within the cuvette 300. That is, the primary reaction section 12 is provided to induce a reaction between the antigen in the sample and the R2 reagent which includes magnetic particles within the cuvette 300. The primary reaction section 12 is configured by a rotating table 12a which transports, in a rotational direction, the cuvette 300 containing the sample, the R1 reagent, and the R2 reagent, and a cuvette conveyor 12c which mixes the sample, the R1 reagent and the R2 reagent within the cuvette 300 and transports the cuvette 300 that contains the mixed sample, R1 reagent and R2 reagent to a BF separation section 15 (to be described later).

The rotating table 12a is configured to rotate the cuvette 300 held in the holder 12b through a predetermined angle every 18 seconds. The various devices (sample dispensing arm 6, reagent dispensing arms 9 and 10 and the like) of the immunoanalyzer 1 are therefore controlled so as to perform operations on the cuvette 300 as the cuvette is conveyed to predetermined positions in accordance with the timing by which the rotating table 12a transports the cuvette 300 to the predetermined positions.

The cuvette conveyor 12c is arranged in the central area of the rotating table 12a so as to be rotatable. The cuvette conveyor 12c has the functions of holding the cuvette 300, which is held in the holder 12b of the rotating table 12a, and mixing the sample within the cuvette 300. The cuvette conveyor 12c also has the functions of mixing the sample, the R1 reagent and the R2 reagent, and transporting the cuvette 300 which contains the incubated sample to the BF separation section 15.

The secondary reaction section 13 has a configuration identical to the primary reaction section 12, and is provided to rotate the cuvette 300, which is held by a holder 13b of a rotating table 13a, through a predetermined angle at predetermined intervals (every 18 seconds in the present embodiment) so as to mix the sample, the R1 reagent, the R2 reagent, the R3 reagent, the R4 reagent, and the R5 reagent within the cuvette 300. That is, the secondary reaction section 13 is provided to induce a reaction between the antigen in the sample and the R3 reagent which includes a labeling antibody in the cuvette 300, and to induce a reaction between the labeling antibody of the R3 reagent and the R5 reagent which include a luminous substrate. The R4 reagent and the R5 reagent are configured so as to be dispensed into a cuvette 300, which contains the sample, the R1 reagent, the R2 reagent, and the R3 reagent in the secondary reaction section 13, by an R4 reagent dispensing arm (not shown in the drawing) and an R5 reagent dispensing arm (not shown in the drawing) that are provided near the secondary reaction section 13. The secondary reaction section 13 is configured by a rotating table 13a which transports, in a rotational direction, the cuvette 300 containing the sample, the R1 reagent, the R2 reagent, the R3 reagent, the R4 reagent, and the R5 reagent, and a cuvette conveyor 13c which mixes the sample, the R1 reagent, the R2 reagent, the R3 reagent, the R4 reagent, and the R5 reagent within the cuvette 300 and transports the cuvette 300 that contains the mixed sample and the like to the BF separation section 15. The cuvette conveyor 13c has the function of returning the cuvette 300, which has been processed by the BF separation section 15, back again to a holder 13b of the rotating table 13a. The structural details of the secondary reaction section 13 are omitted since they are identical to the primary reaction section 12.

The cuvette supplying section 14 is configured to be capable of sequentially supplying a plurality of cuvettes 300 (refer to FIG. 6) to the holder 12b of the rotating table 12a of the primary reaction section 12. The cuvette supplying section 14 includes a hopper feeder 141 which is capable of accommodating a plurality of cuvettes 300, two guide plates 142 which are disposed below the hopper feeder 141, a support platform 143 which is arranged at the bottom end of the guide plates 142, and a cuvette catcher 144. The two guide plates 142 are arranged so as to be mutually parallel with a space therebetween that becomes narrower than the diameter of a flange 300a (refer to FIG. 6) of the cuvette 300, and becomes larger than the diameter of the barrel 300b (refer to FIG. 6) of the cuvette 300. The hopper feeder 141 includes a hopper 141a which is capable of accommodating a plurality of cuvettes 300, a motor 141b as a drive source, a pulley 141c which is mounted on the shaft of the motor 141b. a pulley 141d which is arranged at a predetermined spacing from the pulley 141c, a drive transmission belt 141e which is installed through the pulley 141c and the pulley 141d, and an arm 141f which is mounted on the shaft of the pulley 141d. The plurality of cuvettes 300, which have been supplied into the hopper 141a of the hopper feeder 141, are arrayed along the guide plates 142 in a state in which the flanges 300a engage the top surface of the two guide plates 142 by having the arm 141f stir the interior of the hopper 141a. The support platform 143 has a rotating part 143a which is rotatable relative to the support platform 143, and a concavity (not shown in the drawing) which is provided so as to be adjacent to the rotating part 143a. Three notches (not shown in the drawing) are formed at a predetermined angles (every 120 degrees in the present embodiment) on the peripheral part of the rotating part 143a. The notch is provided to accept, one by one, the cuvettes that are guided by the guide plates 142. The concavity is configured to receive the cuvette 300 which rotates while seated in the notch of the rotating part 143a.

The cuvette catcher 144 has the function of transporting a cuvette 300 which is seated in the concavity (refer to FIG. 6) to the holder 12b of the rotating table 12a of the primary reaction section 12. The cuvette catcher 144 has a motor 144a, a pulley 144b which is connected to the motor 144a. a pulley 144c which is arranged at a predetermined spacing from the pulley 144b, a drive transmission belt 144d which is installed through the pulley 144b and the pulley 144c, an arm 144e which is mounted on the shaft of the pulley 144c, and a drive unit 144f which moves the arm 144e in vertical directions. A chuck 144g is provided on the leading end of the arm 144e to clamp and hold a cuvette 300. The cuvette catcher 144 is configured to sequentially supply cuvettes 300 to the holder 12b of the rotating table 12a of the primary reaction section 12 by having the chuck 144g hold the cuvette 300.

The BF separation section 15 has the function of separating the magnetic particles and the unreacted R1 reagent (unnecessary component) from the sample within a cuvette 300 which has been transported by the cuvette conveyor 12c of the primary reaction section 12, and the function of separating the magnetic particles and the unreacted R3 reagent (unnecessary component) from the sample within the cuvette 300 which has been transported by the cuvette conveyor 13c of the secondary reaction section 13.

The detector 16 is provided to measure the amount of antigen contained in a sample by measuring, using a photomultiplier tube, the amount of light generated during the reaction process between a luminous substrate and a labeling antibody which has been bound to the antigen of the sample by a predetermined process. The detector 16 internally includes placement sites (not shown in the drawing) for the placement of the cuvette 300 which contains a sample, and R1, R2, R3, R4, and R5 reagents. The detector 16 is also configured to block external light from entering a cuvette 300 which has been installed in the internal placement site while measurement are performed.

The cuvette transporting unit 17 is provided on the top surface of the detector 16, and is configured to transport the cuvette 300 from the detector 16 to a predetermined position in the liquid aspiration section 18 after the measurement has been performed, and transport the cuvette 300 from the predetermined position of the liquid aspiration section 18 to a predetermined position in the cuvette disposal section 19 which is to be described later.

The liquid aspiration section 18 is configured to aspirate liquid from a cuvette 300 containing a sample, R1, R2, R3, R4, and R5 reagents and which has been transported to a predetermined position by the cuvette transporting unit 17.

The cuvette disposal section 19 is provided for the disposal of the cuvette 300 after the liquid has been aspirated by the liquid aspiration section 18.

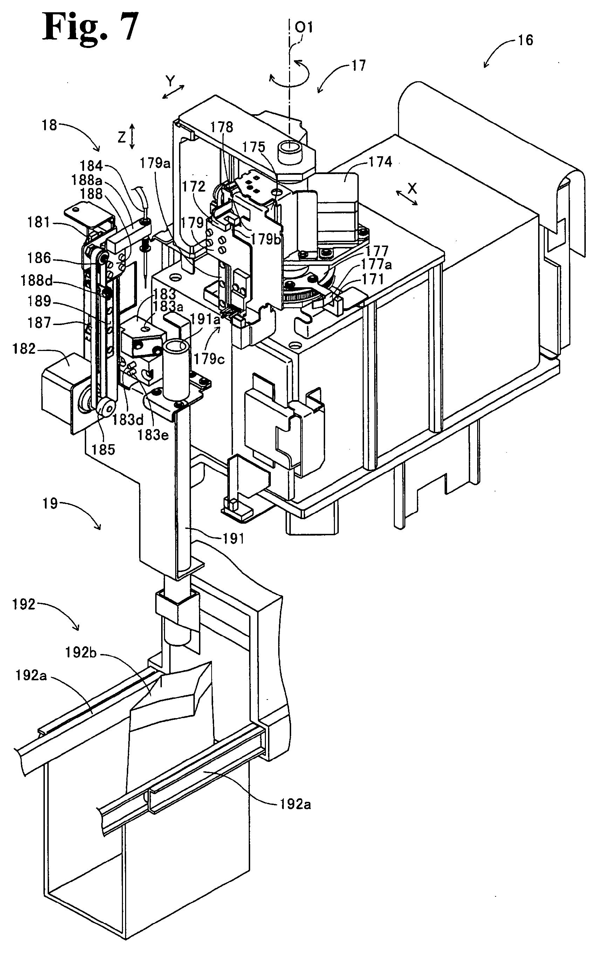

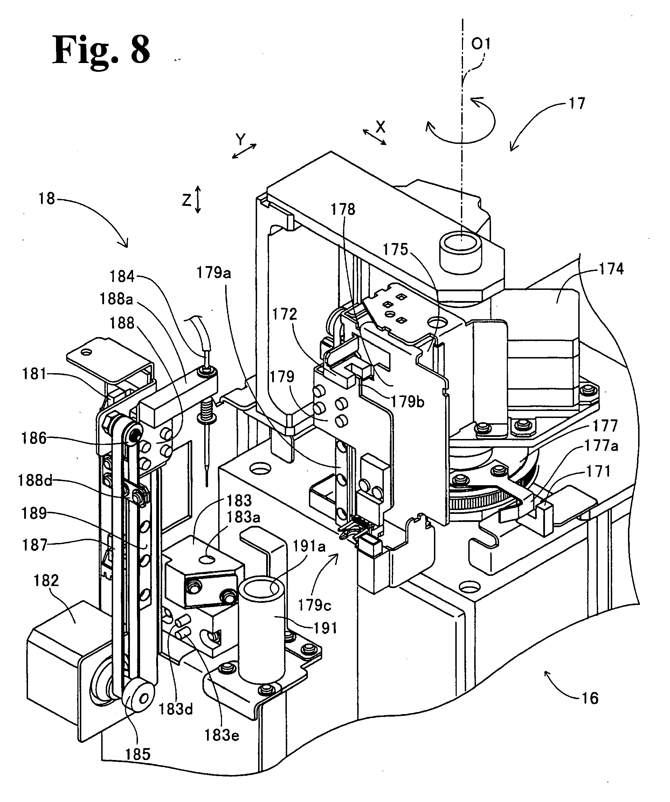

Details of the structures of the cuvette transporting unit 17, the liquid aspiration section 18, and the cuvette disposal section 19 of the embodiment of the present invention are described below with reference to FIGS. 7 through 25.

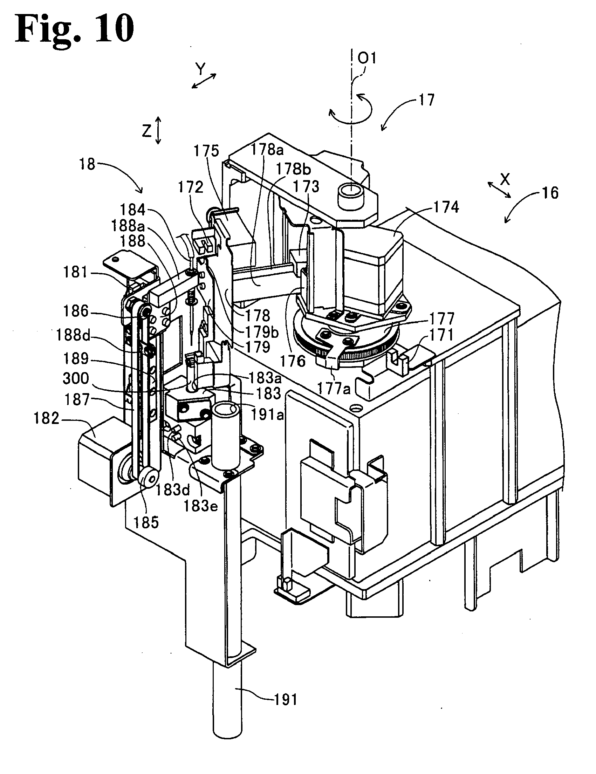

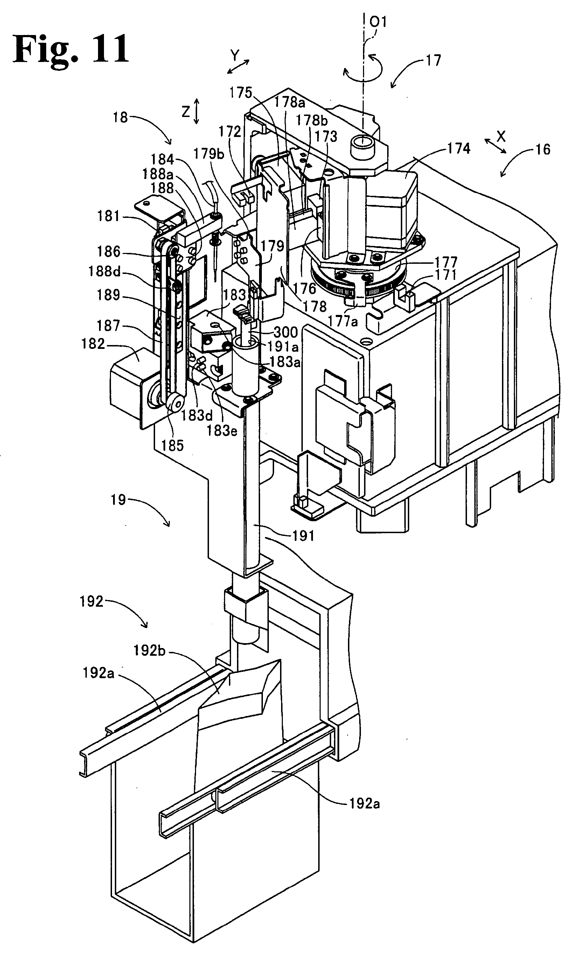

As shown in FIGS. 7 through 11, the cuvette transporting unit 17 includes light transmission type sensors 171, 172, and 173 (refer to FIGS. 10 and 11), stepping motors 174, 175, and 176 (refer to FIGS. 10 and 11), rotating member 177, moving member 178, and a vertical moving member 179 which is mounted on the moving member 178.

The rotating member 177 is configured to be rotated by the stepping motor 174 using the center 01 (refer to FIGS. 7 through 11) as the rotational axis. A detection piece 177a is mounted on the rotating member 177, and the detection piece 177a is configured to shield the sensor 171 from light when the surface of the moving member 178 is rotated in conjunction with the rotation of the rotating member 177 so as to be disposed at a position perpendicular to the arrow Y direction (refer to FIGS. 7 through 9).

The moving member 178 is configured to both rotate and move from the center 01 of the rotating member 177 to the outer side in the radial direction (the direction away from the center 01) in conjunction with the rotation of the rotating member 177, as shown in FIGS. 10 and 11. Specifically, a front-and-back moving member 178a (refer to FIGS. 10 and 11) is mounted on the moving member 178, and the stepping motor 176 is disposed near the front-and-back moving member 178a. The moving member 178 moves linearly from the center 01 in an outward radial direction (a direction away from the center 01) in conjunction with the movement of the front-and-back moving member 178a from the center 01 of the rotating member 177 in an outward radial direction (a direction away from the center 01) via the stepping motor 176. The front-and-back moving member 178a is provided with a detection piece 178b (refer to FIGS. 10 and 11) which is detected by the sensor 173.

The vertical moving member 179 moves in conjunction with the movement of the moving member 178 from the center 01 of the moving member 177 and in the rotation direction of the rotating member 177 by mounting the moving member 178 as shown in FIGS. 10 and 11. The vertical moving member 179 is also configured to be movable in vertical directions (arrow Z directions) along guide rail 179a which is mounted on the moving member 178 (refer to FIGS. 7 through 9) via the stepping motor 175. The vertical moving member 179 is also provided with a detection piece 179b which is detected by the sensor 172.

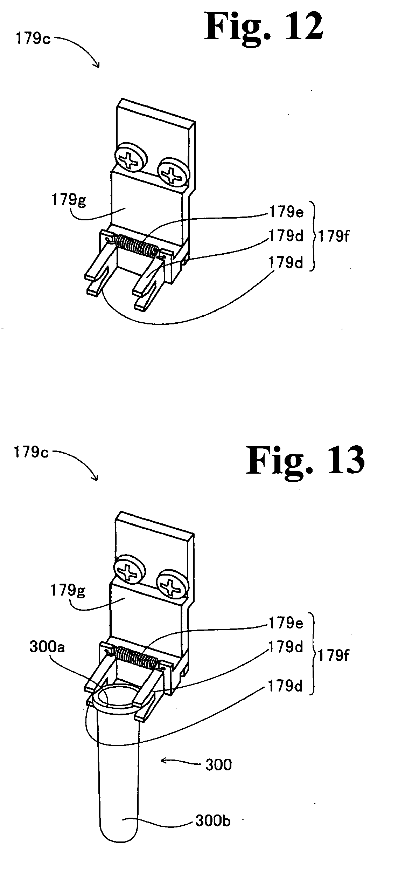

In the present embodiment, the vertical moving member 179a is provided with a gripper 179c to grip the cuvette 300 (refer to FIG. 6) as shown in FIGS. 7 through 11. The gripper 179c has a chuck 179f which is configured by a pair of members 179d to hold the flange 300a of the cuvette 300, and a coil spring 179e which is coiled between the pair of members 179d, and a support member 179g to support the chuck 179f, as shown in FIGS. 12 and 13. The gripper 179c is therefore capable of gripping a cuvette 300, which is disposed between the members 179d of the chuck 179f, by means of the force exerted by the coil spring 179e, as shown in FIG. 13. When the cuvette 300 is gripped by the gripper 179c, as shown in FIGS. 10 and 11, the cuvette transporting unit 17 can, after the measurement has been performed, transport the cuvette 300 from the detector 16 to a cuvette placement site 183a of the liquid aspiration section 18 (to be described later), and can, after the liquid has been aspirated, transport the cuvette 300 from the cuvette placement site 183a of the liquid aspiration section 18 to a cuvette disposal hole 191a of the cuvette disposal section 19.

The liquid aspiration section 18 is provided to aspirate and dispose of the liquid from the cuvette 300 which contains a sample, R1, R2, R3, R4, and R5 reagents after a measurement has been performed by the detector 16. The liquid aspiration section 18 also includes, as shown in FIGS. 7 through 11, a sensor 181, a stepping motor 182, an adsorption section 183 which magnetically adsorbs the magnetic particles in the cuvette 300, a nozzle 184 to aspirate the liquid within the cuvette 300, a pulley 185 which is connected to the stepping motor 182, a pulley 186 which is disposed with a predetermined spacing relative to the pulley 185, a drive transmission belt 187 which is installed between the pulley 185 and the pulley 186, a vertical moving member 188 which is connected to the drive transmission belt 187, and a guide rail 189.

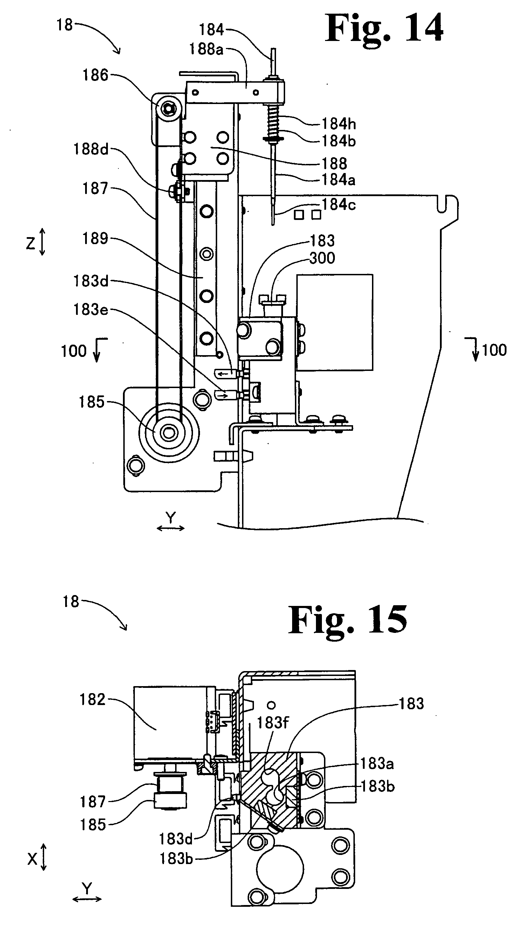

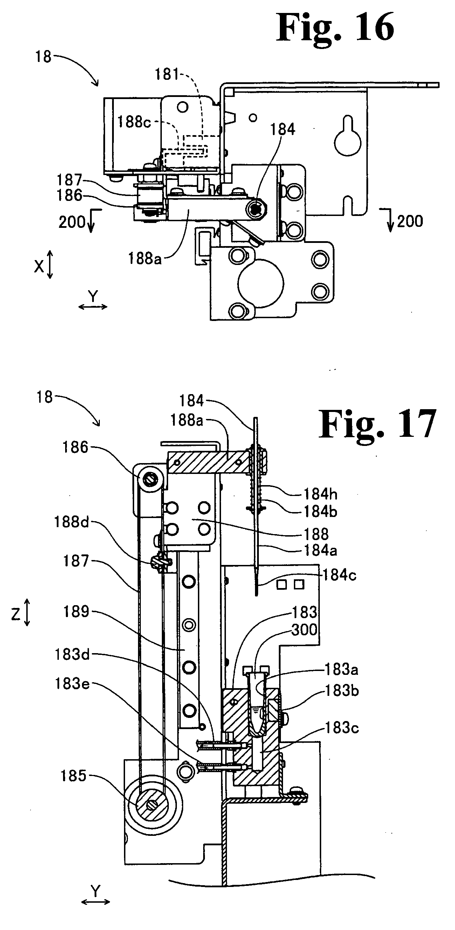

The adsorption section 183 includes a concave cuvette placement site 183a which has an interior diameter that is somewhat larger than the exterior diameter of the barrel 300b of the cuvette 300 so as to accommodate the cuvette 300 at position counter to the nozzle 184, a magnet 183b (refer to FIGS. 15 and 17) which is disposed near the cuvette placement site 183a to magnetically adsorb the magnetic particles within the cuvette 300, a washing unit 183c (FIG. 17) to wash the disposal path through which passes the liquid that was aspirated from the cuvette 300 by the nozzle 184, a washing liquid drainage unit 183d to drain the excess washing liquid from the washing unit 183c, a washing liquid injection unit 183e to inject a washing liquid into the washing unit 183c, and a concavity 183f for the overflow of the washing liquid, as shown in FIGS. 7 through 11 and FIG. 17.

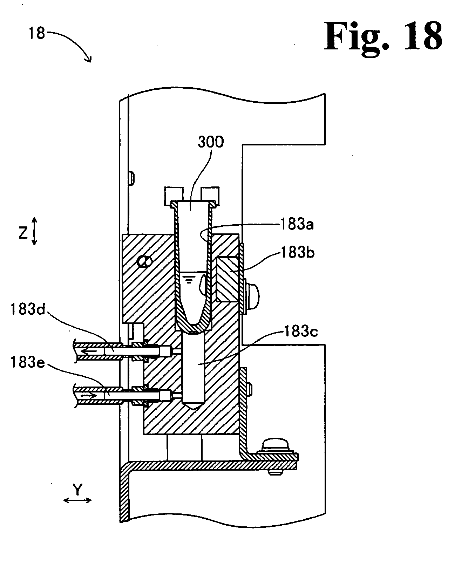

In the present embodiment, the magnet 183b (refer to FIGS. 15 and 17) is disposed at the side and near the cuvette placement site 183a, and at a position higher than the bottom of the cuvette placement site 183a. A magnet 183b is provided at two positions at a predetermined distance in the radial direction from the inner surface of the cuvette placement site 183a and at an angular spacing of approximately 120 degrees. The two magnets 183b therefore can magnetically adsorb the magnetic particles within the cuvette 300 to the side surface of the cuvette 300 when the cuvette 300 is placed in the cuvette placement site 183a, as shown in FIG. 18. The nozzle 184 is configured to aspirate the liquid within the cuvette 300 when the magnetic particles have been magnetically adsorbed by the two magnets 183b.

The washing unit 183c (refer to FIG. 17) is provided to wash the liquid aspiration section 18 after the liquid has been aspirated from the cuvette 300. The washing unit 183c is also integrated with the cuvette placement site 183a at the bottom of the cuvette placement site 183a. Specifically, the washing unit 183c is a concavity connected to the bottom of the concavity of the cuvette placement site 183a, and which has an interior diameter that is both smaller than the cuvette placement site 183a and larger than the leading end 184c and the body 184a of the nozzle 184, as shown in FIG. 18. The washing unit 183c is arranged along an extended line in the direction in which the nozzle 184 (to be described later) aspirates the liquid from the cuvette 300 (Z direction). At the top of the side of the washing unit 183c are arranged the washing liquid drain unit 183d to drain the washing liquid from the washing unit 183c, and a washing liquid injection unit 183e to inject washing liquid into the washing unit 183c. The disposal path of the liquid of the liquid aspiration section 18 can therefore be washed when the nozzle 184 aspirates the washing liquid aspirated into the washing unit 183c.

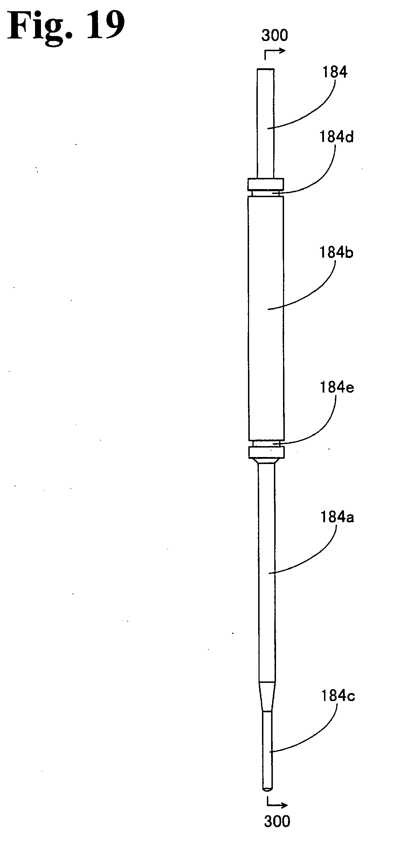

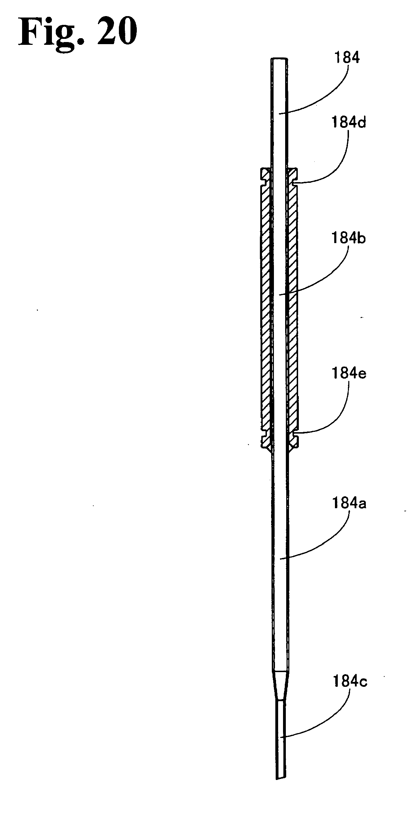

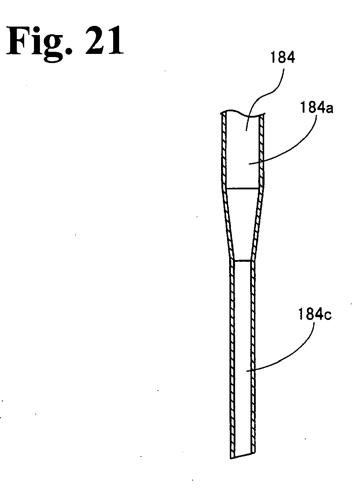

As shown in FIGS. 19 and 20, the nozzle 184 has an overall tapered shape and includes a body 184a, a mounting part 184b which has an exterior diameter that is greater than the exterior diameter of the body 184a, and a tip 184c which has an exterior diameter that is smaller than the exterior diameter of the body 184a. Channels 184d and 184e are respectively provided on the top and bottom ends of the mounting part 184b. As shown in FIG. 21, the bottom end of the tip 184c of the nozzle 184 is inclined relative to the axial direction of the nozzle 184. Since a gap is created between the bottom end of the nozzle 184 and the bottom of the cuvette 300, the bottom end of the nozzle 184 is not blocked by the bottom of the cuvette 300 and all the liquid can therefore be aspirated even when the bottom end of the tip 184c of the nozzle 184 comes into contact with the bottom of the cuvette 300 to aspirate the liquid within the cuvette 300. Furthermore, the liquid within the cuvette 300 can be reliably aspirated due to the high liquid aspiration force of the tip 184c by providing a tip 184c which has an exterior diameter that is smaller than the exterior diameter of the body 184a of the nozzle 184.

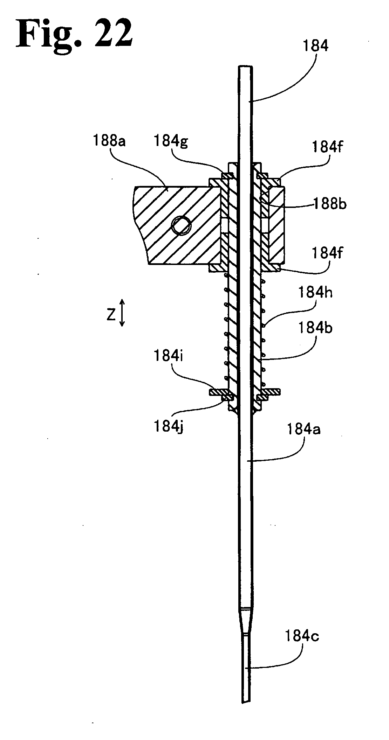

As shown in FIGS. 7 through 11 and FIG. 22, the nozzle 184 is mounted on the leading end of an arm 188a which is mounted parallel to the vertical moving member 188. Specifically, the mounting part 184b of the nozzle 184 can be mounted, through the mounting member 184f, in a nozzle mounting hole 188b provided on the leading end of the arm 188a, as shown in FIG. 22. The nozzle 184 is configured with scant friction resistance between the inner surface of the mounting member 184f and the exterior surface of the mounting member 184b of the nozzle 104, so as to be movable in vertical directions (Z arrow directions) relative to the mounting hole 188b. Furthermore, an E-ring 184g is mounted in the channel 184d (refer to FIGS. 19 and 20) formed at the top end of the mounting part 184b of the nozzle 184 so that the nozzle 184 will not fall from the mounting hole 188b. A spring 184h is mounted on the exterior surface of the mounting part 184b of the nozzle 184 which is positioned below the mounting hole 188b, and the top end of the spring 184h comes into contact with the mounting member 184f which is mounted at the mounting hole 188b. The bottom end of the spring 184h comes into contact with a stopper 184i which is inserted in the bottom end of the mounting part 184b of the nozzle 184, and an E-ring 184j is mounted in the channel 183e) refer to FIGS. 19 and 20) provided at the bottom end of the mounting part 184b of the nozzle 184 so as to prevent the stopper 184i from falling from the mounting part 184b. The spring 184h is also configured to exert a downward force on the nozzle 184. The nozzle 184 is therefore forced downward by the spring 184h, and moves downward from a predetermined position when the E-ring 184g, which is mounted on the top end of the mounting part 184b, comes into contact with the top surface of the mounting member 184f. The nozzle 184 can also move upward as far as the contraction limit of the spring 184h via the force in the upward direction against the force exerted by the spring 184h. Damage to the cuvette 300 and the nozzle 184 can be suppressed because the nozzle 184 is upwardly movable, even when the nozzle 184 moves downward and comes into contact with the bottom of the cuvette 300 in order to aspirate the liquid from the cuvette 300.

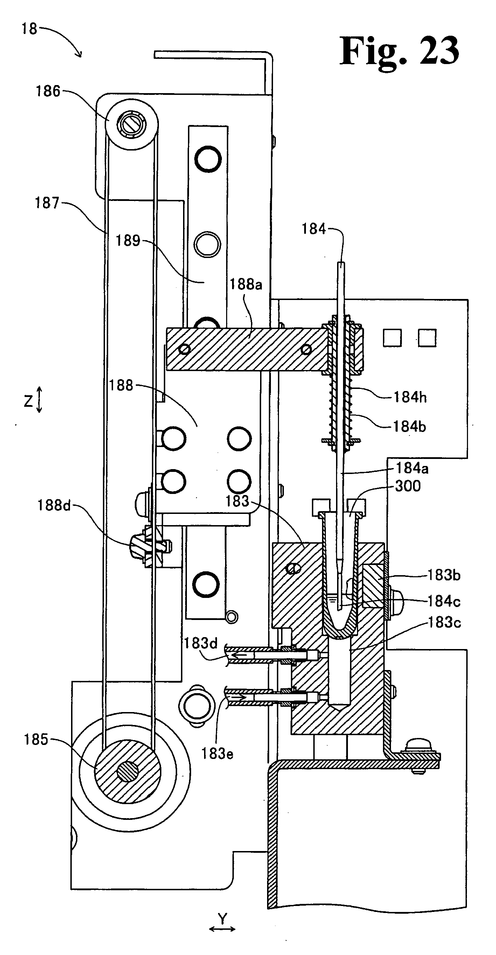

The vertical moving member 188 includes a detection piece 188c (refer to FIG. 16) which is detected by the sensor 181, and a belt linkage 188d to connect the vertical moving member 188 to the drive transmission belt 187 so as to integratedly move together with the drive transmission belt 187. Since the drive transmission belt 187 is driven through the pulley 185 by the drive of the stepping motor 182 (refer to FIGS. 7 through 11), the vertical moving member 188, which is linked to the drive transmission belt 187, is moved in vertical directions (arrow Z directions) along the guide rail 189, as shown in FIGS. 23 through 25. At this time the nozzle 184, which is mounted to the arm 188a of the vertical moving member 188, also moves in vertical directions together with the vertical moving member 188.

As shown in FIGS. 1 and 7, the cuvette disposal section 19 includes a disposal pipe 191 which has a cuvette disposal hole 191a disposed near the liquid aspiration section 18, and a used cuvette receptacle 192 which is disposed below the cuvette disposal hole 191.

As shown in FIGS. 7 and 10, the disposal pipe 191 is cylindrical and extends in a vertical direction (arrow Z direction), and functions as a guide to guide a cuvette which has been transported by the cuvette transporting unit 17 to the used cuvette receptacle 192 positioned therebelow.
As shown in FIGS. 1 and 7, the used cuvette receptacle 192 is configured removable from the immunoanalyzer 1 by sliding the used cuvette receptacle 192 in forward and back directions ((arrow Y directions) on rails 192a. A used cuvette bag 192b is provided at a position below the disposal pipe 191 of the used cuvette receptacle 192.When a cuvette 300 is discarded in the cuvette disposal hole 191a, the cuvette 300 is therefore guided by the cuvette disposal hole 191a and received in the used cuvette bag 192b. The user can then remove the used cuvette receptacle 192 which contains the used cuvette bag 192b from the immunoanalyzer 1, and easily dispose of the used cuvette bag 192b which holds the cuvette 300 without touching the cuvette 300.

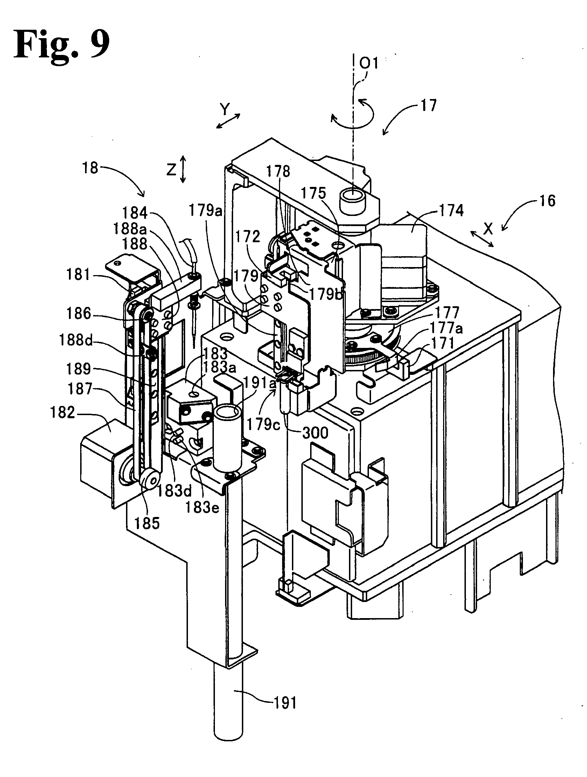

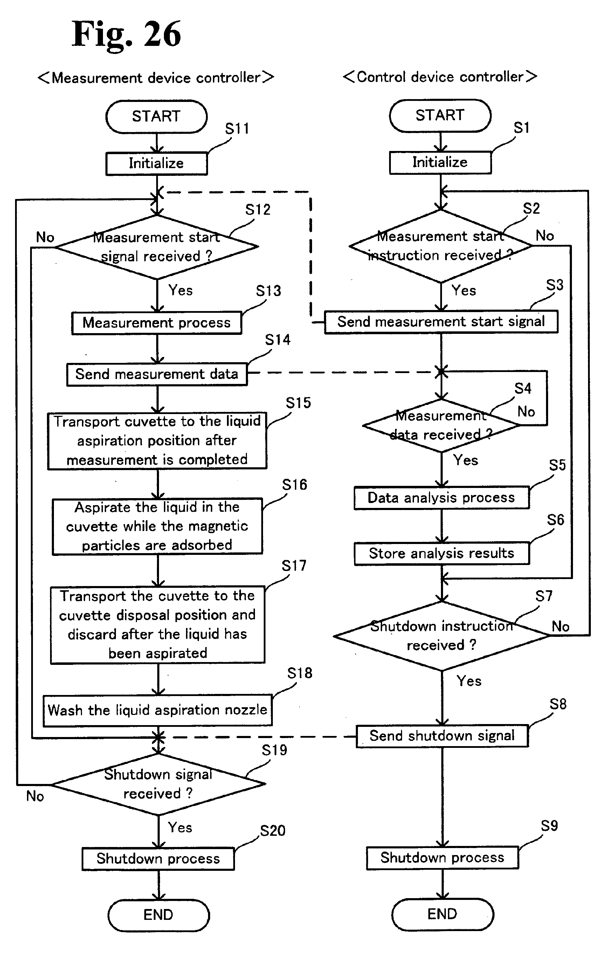

FIG. 26 is a flow chart illustrating the series of operations from the beginning of the startup to the end of the startup of the immunoanalyzer of the embodiment of the present invention. The series of operations of the immunoanalyzer 1 of the present embodiment is described below with reference to FIGS. 9 through 11, 17, 18, and FIGS. 23 through 26.

When the control device 4 is started by a user, a computer program is initialized by the controller 4a of the control device 4 in step S1. When the user starts the measuring device 2, a computer program is initialized and the operation of the various parts of the measuring device 2 is checked by the controller 2a of the measuring device 2 in step S11. In step S2 the controller 4a determines whether or not a measurement start instruction has been received from the user, and the routine moves to step S7 when a measurement start instruction has not been received. When a measurement start instruction has been received, however, a measurement start signal is sent to the controller 2a in step S3 to start the measurement by the measuring device 2.

In step S12 the controller 2a determines whether or not a measurement start signal has been received from the controller 4a of the control device 4, and the routine moves to step S19 when a start signal has not been received. When a measurement start signal has been received, however, a predetermined measurement process is performed in step S13, and the measurement data from this process is sent to the controller 4a of the control device 4 in step S14.

In this case, the controller 4a of the control device 4 repeats the determination when it has been determined in step S4 that the measurement data have not been received from the controller 2a. When the measurement data have been received, however, the measurement data are analyzed in step S5, and the analysis results obtained by this analysis process are stored on the hard disk 401d in step S6. In step S7 a determination is made as to whether or not a shutdown instruction has been received from the user, and when no instruction has been received, the routine moves to step S2 and a determination is made as to whether or not a re-measurement start instruction has been received. When a shut down instruction has been received in step S7, a shutdown signal is sent to the controller 2a of the control device 2 to end the start condition of the measurement device 2 in step S8.

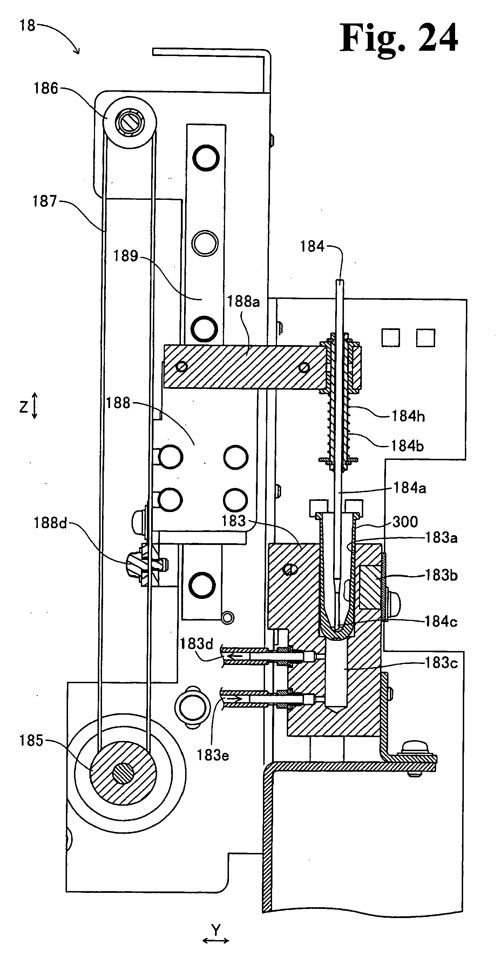

In the present embodiment, the operations of steps S15 through S18 are performed on the measurement device 2 side at the same time as the operations of steps S4 through S8 are performed on the control device 4 side after the measurement data have been sent to the controller 4a of the control device 4. Specifically, in step S15 after the measurement has been performed by the detector 16, the a cuvette 300 which contains the sample, R1, R2, R3, R4, and R5 reagents is transported from the detector 16 to the cuvette placement site 183a of the liquid aspiration section 18 in a state in which the cuvette 300 is gripped by the gripper 179c of the cuvette transporting unit 17 and accommodated there, as shown in FIGS. 9 and 10. In step S16 the magnetic particles within the cuvette 300 placed at the cuvette placement site 183a are magnetically adsorbed to the lateral surface of the cuvette 300 by the magnet 183b disposed in the lateral direction of the cuvette placement site 183a, as shown in FIGS. 17 and 18. In this state, the nozzle 184 of the liquid aspiration section 18 is lowered and aspirates the liquid in the cuvette 300 as shown in FIG. 23. Specifically, the vertical moving member 188, which is linked to the drive transmission belt 187, moved downward along the guide rail 189 because the drive transmission belt 187 is driven through the pulley 185 via the drive of the stepping motor 182 (refer to FIGS. 7 through 11) with the magnetic particles within the cuvette 300 magnetically adsorbed to the side surface as shown in FIG. 23. The nozzle 184, which is mounted on the arm 188a of the vertical moving member 188, is also lowered in this way. Then the liquid is aspirated by inserting the tip 184c of the nozzle 184 into the liquid in the cuvette 300. At this time, the stepping motor 182 is then actuated to move the tip 184c of the nozzle 184 downward so as to not be exposed above the surface of the liquid in conjunction with the lowering of the surface of the liquid s the liquid is aspirated. Finally, the liquid is aspirated with the inclined end of the tip 184c of the nozzle 184 in contact with the bottom of the cuvette 300 as shown in FIG. 24. Thus, the nozzle 184 can completely aspirate all the liquid within the cuvette 300.

In the present embodiment, after the liquid has been completely aspirated, the cuvette 300 is transported from the cuvette placement site 183a to the cuvette disposal hole 191a by the cuvette transporting unit 17 and discarded in step S17 as shown in FIG. 11. Specifically, after the liquid within the cuvette 300 has been completely aspirated by the nozzle 184, the nozzle 184 is raised and returned to the origin position by actuating the stepping motor 182 (refer to FIGS. 7 through 11) . After the liquid has been completely aspirated, the cuvette 300 is gripped by the gripper 179c of the cuvette transporting unit 17 and transported from the cuvette placement site 183a to the cuvette disposal hole 191a and there discarded. The cuvette and the measured liquid can thus be respectively separated and discarded. Magnetic particles remain in the cuvette 300 after the liquid has been completely aspirated by the nozzle 184, and the cuvette 300 containing these magnetic particles is discarded through the cuvette disposal hole 191a.

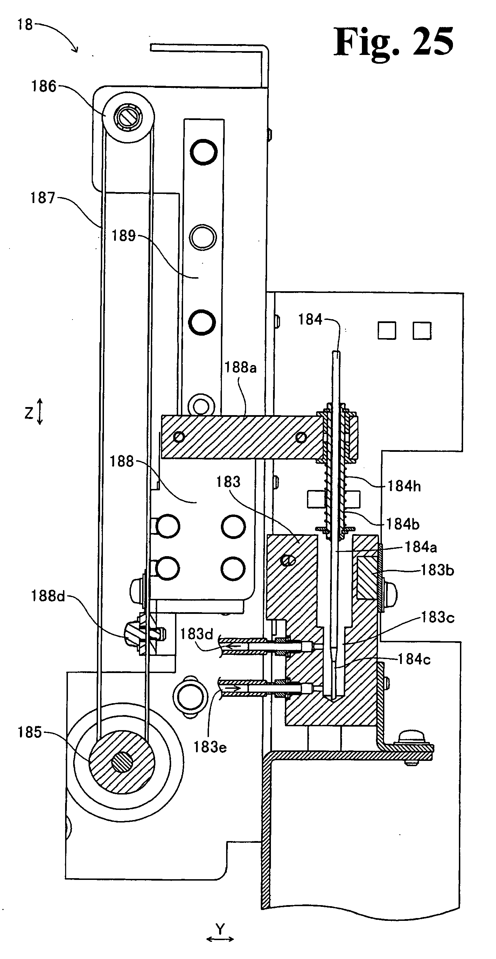

As shown in FIG. 25, a washing liquid is injected from the washing liquid injection unit 183e to the washing unit 183c, and the nozzle 184 is again lowered and the tip 184c is inserted into the washing liquid of the washing unit 183c. The liquid disposal path of the liquid aspiration section 18 is thus washed when the nozzle 184 aspirates the washing liquid. Thereafter, the nozzle 184 is raised and returned to the origin position.

In step S19 a determination is made as to whether or not a shutdown signal has been received from the controller 4a of the control device 4, and the routine moves to step S12 when no signal has been received. When a shutdown signal has been received, however, the shutdown process of the measuring device 2 is performed and the operation ends in step S20.

At this time on the control device 4 side, the shutdown process of the control device 4 is performed and the operation ends in step S9.

Since in the present embodiment as described above the aspiration of magnetic particles can be suppressed by providing an adsorption section 183 to magnetically adsorb the magnetic particles within the cuvette 300 after the detector 16 has performed the measurement, and a liquid aspiration section 18 to aspirate the liquid within the measured cuvette 300 in a state in which the magnetic particles within the cuvette 300 are magnetically adsorbed by the adsorption section 183, the liquid aspiration section 18 is not jammed by the magnetic particles, and the liquid within the cuvette 300 can be reliably aspirated. Furthermore, the cuvette 300, which has been measured and had the liquid separated therefrom, can be discarded in the cuvette disposal section 19 by providing a cuvette transporting unit 17 to transport the cuvette 300 from which the liquid has been aspirated by the liquid aspiration section 18, and a cuvette disposal section 19 to accommodate the cuvette 300 which has been transported by the cuvette transporting unit 17. In the immunoanalyzer 1, therefore, the cuvette and the measured liquid can be respectively separated and discarded even when the liquid contains magnetic particles.

In the present embodiment, the magnetic particles are prevented from accumulating at the bottom of the cuvette 300 because the magnetic particles within the cuvette 300 can be magnetically adsorbed to the side of the cuvette 300 by arranging the magnets 183b of the adsorption section 183 in the lateral direction of the cuvette 300 which is accommodated at the cuvette placement site 183a. As a result, the liquid can be aspirated with the liquid aspiration section 18 in contact with the bottom of the cuvette 300 so that the liquid aspiration section 18 does not aspirate the magnetic particles and the liquid is completely aspirated.

In the present embodiment, unnecessary material accumulated in the liquid aspiration section 18 can be eliminated by providing a washing unit 183c to wash the liquid aspiration section 18. Therefore, the liquid aspiration section 18 is not jammed by the unnecessary material, and the liquid within the cuvette 300 can be reliably aspirated.

In the present embodiment, it is not necessary to move the liquid aspiration section 18 in different directions when washing the aspiration section 18 and when aspirating the liquid within the cuvette 300 because the washing unit 183c is disposed on an extended line in the direction in which the liquid aspiration section 18 is moved to aspirate the liquid within the cuvette 300. Therefore, the liquid aspiration section 18 can be washed without providing a separate mechanism to move the liquid aspiration section 18 in a different direction.

In the present embodiment, the cuvette 300 can be easily discarded through the cuvette disposal hole 191a to the used cuvette receptacle 192, and the used cuvette receptacle 192 can be easily removed from the apparatus by a configuration in which the cuvette disposal section 19 includes a cuvette disposal hole 191a, and a used cuvette receptacle 192 which can be removed from the apparatus and is disposed below the cuvette disposal hole 191a. Therefore, the cuvettes 300 discarded in the used cuvette receptacle 192 can be easily discarded.

In the present embodiment described above, the aspiration of magnetic particles can be prevented so that the magnetic particles do not cause a jam, and the liquid within the cuvette 300 can be reliably aspirated by providing a step of magnetically adsorbing the magnetic particles within the cuvette 300, and a step of aspirating the measured liquid from the cuvette 300 with the magnetic particles in a magnetically adsorbed state. Furthermore, the cuvette 300 from which the liquid has been separated after measurement can be discarded in the cuvette disposal section 19 by providing a step to transport the cuvette 300 from which the liquid has been aspirated to the cuvette disposal section 19. Therefore the cuvette 300 and the measured liquid can be respectively separated and discarded even when a reagent contains magnetic particles.

In the present embodiment, unnecessary material is eliminated and does not stay in the liquid aspiration section 18 after the liquid within the cuvette 300 has been aspirated by providing a step of washing the liquid aspiration section 18 after the measured liquid has been aspirated from the cuvette 300 by the liquid aspiration section 18. Therefore, the liquid aspiration section 18 is not jammed by the unnecessary material, and the liquid within the cuvette 300 can be reliably aspirated.

In the present embodiment, the magnetic particles within the cuvette 300 are reliably adsorbed magnetically by a magnet by accommodating the cuvette 300 at the concavity of the cuvette placement site 183a.

The embodiment of the present disclosure is exemplary in all aspects and should not be considered limiting in any way. The scope of the present invention is defined by the scope of the claims and not be the description of the embodiment, and includes all modifications within the scope of the claims and the meanings and.equivalences therein.

For example, although the immunoanalyzer 1 is described as an example of the sample analyzer in the present embodiment, the present invention is not limited to this immunoanalyzer inasmuch as the invention is applicable to other sample analyzers insofar as the sample analyzer uses reagent that contains magnetic particles.

Although the present embodiment has been described in terms of an example using a luminous substrate (R5 reagent) to quantitatively measure an antigen, the present invention is not limited to this arrangement insofar as the antigen can be quantitatively measured, for example, a luminous substance may also be bound to the labeling antibody (R3 reagent) without using the luminous substrate (R5 reagent).

Although an antigen contained in a sample is detected using a capture antibody or the like in the present embodiment, the present invention is not limited to this arrangement inasmuch as an antibody generated in relation to an antigen within the sample may also be detected depending on the measurement item.

Although the present embodiment has been described by way of an example of a used cuvette bag 192b provided in a used cuvette receptacle as a container for accommodating used cuvettes 300, the present invention is not limited to this arrangement since, for example, a container such as a used cuvette box or the like may also be used insofar as such a container is capable of accommodating the used cuvettes 300.

Although the cuvette 300 is discarded through the cuvette disposal hole 191a while the cuvette 300 still contains magnetic particles after the analyzed liquid has been aspirated by the nozzle 184 in the above embodiment, the present invention is not limited to this arrangement inasmuch as, for example, a mechanism may also be provided to remove the magnetic particles in the cuvette 300 before the cuvette 300 is discarded through the cuvette disposal hole 191a after the analyzed liquid has been aspirated by the nozzle 184.

Although the above embodiment has been described in terms of aspirating a liquid in a cuvette 300 while the cuvette 300 is accommodated at the cuvette placement site 183a, and thereafter the cuvette 300 is transported from the cuvette placement site 183a to the cuvette disposal hole 191a by the cuvette transporting unit 17 where the cuvette 300 is discarded, the present invention is not limited to this arrangement inasmuch as, for example, the cuvette 300 may also be discarded through the cuvette disposal hole 191a by aspirating the liquid within the cuvette 300 while the cuvette 300 is gripped by the gripper 179c of the cuvette transporting unit 17 above the cuvette disposal hole 191a, after which the gripper 179c releases the cuvette 300.

## Claims

1. A sample analyzer for analyzing a target substance contained in a sample by using a reagent containing a magnetic particle, comprising:
a detector for detecting the target substance by using a container which contains the target substance captured by the magnetic particle;
an adsorption section for magnetically adsorbing the magnetic particle in the container, the target substance in the container having been detected by the detector;
a liquid aspiration section for aspirating a liquid in the container in a state in which the magnetic particle in the container is magnetically adsorbed by the adsorption section, the target substance in the container having been detected by the detector; and
a disposal section for accommodating the container, the liquid in the container having been aspirated by the liquid aspiration section.

2. The sample analyzer of claim 1, wherein
the adsorption section comprises: a concavity for housing the container; and a magnet for magnetically adsorbing the magnetic particle in the container housed in the concavity.

3. The sample analyzer of claim 2, wherein
the magnet of the adsorption section is arranged laterally to the container housed in the concavity.

4. The sample analyzer of claim 1 or claim 2, further comprising
a transfer section for transferring the container to the disposal section, the liquid in the container having been aspirated by the liquid aspiration section.

5. The sample analyzer of claim 4, wherein
the transfer section comprises: a gripper for gripping the container; and a moving device for moving the gripper gripping the container to the disposal section.

6. The sample analyzer of claim 5, wherein
the transfer section is configured to transfer the container, in which the magnetic particle remains, to the disposal section.

7. The sample analyzer of any one of claims 1 to 6, wherein
the liquid adsorption section comprises a tapered nozzle for aspirating the liquid in the container.

8. The sample analyzer of claim 7, wherein
a bottom end of the nozzle is formed so as to be inclined relative to an axial direction of the nozzle.

9. The sample analyzer of claim 7 or claim 8, further comprising a washing unit for washing the nozzle.

10. The sample analyzer of claim 9, wherein
the washing unit is arranged on a line extending in a direction in which the nozzle is moved to aspirate the liquid in the container.

11. The sample analyzer of any one of claims 1 to 10, wherein
the disposal section comprises: a disposal hole; and a used container accommodating section which is arranged below the disposal hole and which is capable of being withdrawn from the sample analyzer.

12. The sample analyzer of claim 11, wherein
the used container accommodating section comprises a disposable receptacle for accommodating used containers.

13. A sample analyzing method for analyzing a target substance contained in a sample by using a reagent containing a magnetic particle, comprising steps of:
(a) detecting the target substance by using a container which contains the target substance captured by the magnetic particle;
(b) magnetically adsorbing the magnetic particle in the container after performing the step (a);
(c) aspirating a liquid in the container while magnetically adsorbing the magnetic particle in the container;
(d) disposing of the container after performing the step (c).

14. The sample analyzing method of claim 13, further comprising a step of
(e) washing a nozzle after aspirating the liquid in the container by the nozzle.

15. The sample analyzing method of claim 14, wherein
a bottom end of the nozzle is formed so as to be inclined relative to an axial direction of the nozzle; and
the step (c) comprises a step of aspirating the liquid while contacting the bottom end of the nozzle with a bottom of the container.
